# EUROPÄISCHE PATENTSCHRIFT

(11) **EP 3 010 028 B1**
(45) Veröffentlichungstag und Bekanntmachung des Hinweises auf die Patenterteilung: **22.03.2017**
(21) Anmeldenummer: 15187988.9
(22) Anmeldetag: 01.10.2015
(51) Int. Cl.: H01G 4/28, H01G 4/30, H01G 2/10, H01C 7/12, E21B 43/24, F16B 7/18, H01G 4/224, E21B 17/02

(54) **MECHANISCH TRAGENDE UND ELEKTRISCH ISOLIERENDE MECHANISCHE VERBINDUNG**
MECHANICALLY HOLDING AND ELECTRICALLY INSULATING MECHANICAL CONNECTION
ELÉMENT DE LIAISON MÉCANIQUE ET ISOLANT ÉLECTRIQUE

(30) Priorität: 13.10.2014 DE 102014220709
(43) Veröffentlichungstag der Anmeldung: 20.04.2016
(73) Patentinhaber: Siemens Aktiengesellschaft, 80333 München (DE)
(72) Erfinder: Danov, Vladimir, Dr., 91056 Erlangen (DE); Koch, Andreas, 91077 Neunkirchen am Brand (DE); Wohlfart, Manfred, 91369 Wiesenthau (DE)

(56) Entgegenhaltungen:
- EP-A2- 2 048 928
- CN-U- 202 384 179
- DE-A1- 2 856 896
- DE-A1-102012 223 559
- FR-A- 939 232
- FR-A- 1 115 560
- US-A- 4 962 440
- US-A1- 2005 285 706

## Beschreibung

Die Erfindung betrifft eine mechanisch tragende und elektrisch isolierende mechanische Verbindung gemäß dem Oberbegriff des Hauptanspruchs.

Die vorliegende Erfindung bezieht sich insbesondere auf eine technische Lösung eines Problems in Bezug auf ein Induktorgehäuse einer induktiven Heizung für die Ölsandförderung. Es sind verschiedene Verfahren zur Ölsandförderung bekannt:
Das Verfahren des sogenannten "Minings". Dabei wird die Erde mit dem Ölsand abgetragen und verarbeitet. Dieses Verfahren kann bis ca. 50 m Tiefe angewendet werden. Dieses Verfahren ist für die vorliegende Erfindung nicht relevant.

Ein weiteres Verfahren ist das sogenannte "Steam assisted gravity drainage"-Verfahren. Gemäß diesem Verfahren wird
Dampf in ein Ölsandreservoir gepresst. Der Dampf fließt durch Spalten und Öffnungen im Reservoir, kondensiert aus und heizt somit das Reservoir. Dieses Verfahren ist energieintensiv und benötigt viel Wasser.

Ein weiteres Verfahren ist das sogenannte "induktive Heizen". Dieses Verfahren wird derzeit intensiver untersucht. Um im Reservoir eine gleichmäßige Verteilung der Wärme zu erreichen, wird das Reservoir induktiv beheizt. Das heißt, die Wärme wird nicht durch Wärmeleitung eines Kabels, sondern durch Wirbelströme, die mit Hilfe von Hochfrequenz erzeugt werden, abgegeben. Zu diesem Verfahren wurden in der Vergangenheit einige Erfindungen gemacht. Das Verfahren kann ebenso mit dem "Steam assisted gravity drainage"-Verfahren kombiniert werden. Um die Wirbelströme zu erzeugen, wird eine Schleife aus einem leitenden Material im Boden verlegt, wobei über die Schleife dann elektrischer Strom fließen kann. Darüber hinaus müssen auch noch Kondensatoren eingebaut werden, um einen Schwingkreis herzustellen. Dies bedeutet, die Schleife wird in einem bestimmten Abstand durch Kondensatoren unterbrochen. Derzeit ergeben sich zwei angestrebte Lösungen: die Wärmeeinkopplung erfolgt mittels einer Kabelschleife mit eingebauten Kapazitäten, wobei man von einem Induktorkabel spricht. Gemäß einer zweiten Ausgestaltung wird der elektrische Strom über Rohre geleitet, die mit Kondensator-Baugruppen unterbrochen werden. Hierbei wird von einem sogenannten Rohrinduktor gesprochen.

Die Erfindung bezieht sich insbesondere auf die Kondensator-Baugruppen in einem Rohrinduktor. Kondensator-Baugruppen sind insbesondere in reih- oder parallelgeschalteter Kapazitäten, die in einem Hohlkörper, insbesondere Hohlzylinder, als Gehäuse untergebracht sind. Ein derartiges Gehäuse hat zwei Aufgaben. Zum einen muss es die eingebauten Kapazitäten von allen auftretenden mechanischen Kräften schützen und zum anderen darf kein Strom über derartige Gehäuse fließen, da sonst die Kapazitäten elektrisch kurzgeschlossen werden.

Die DE 10 2014 200347.4 ist zum Anmeldezeitpunkt dieser Anmeldung noch interner Stand der Technik, der einen Kondensator, insbesondere einen mehrere Kondensatoren umfassenden Aufbau für ein Stromkabel, ein Koaxialkabel und/oder eine resonante Heizleistung offenbart. Die dort vorgelegte Erfindung betrifft einen Kondensator derart, dass eine aus einem Einzelzylinder bestehende Kondensatorvorrichtung durch mehrere elektrisch parallel geschaltete Zylinderkondensatoren mit kleinerem Durchmesser mit oder ohne Zuschaltung eines mittig angeordneten großen eventuell auch einen Zylinderkondensator darstellenden Rohres ersetzt wird. Jeder Einzelzylinder hat beispielsweise den gleichen Aufbau. Er wird beispielsweise elektrisch über seine beiden Endflächen kontaktiert und eignet sich somit für den seriellen Einbau in einen stromführenden elektrischen Leiter, z.B. ein Kabel und/oder ein leitfähiges Rohr.

Die DE 10 2012 217 168.1 ist zum Anmeldezeitpunkt dieser Anmeldung noch interner Stand der Technik, der ein Verfahren zum Herstellen eines Kondensators offenbart. Die Erfindung betrifft weiterhin einen Kondensator sowie die Verwendung eines solchen Kondensators zur Herstellung eines Stromkabels, eines Koaxialkabels und/oder einer resonanten Heizleitung. Die Erfindung offenbart erstmals ein massentaugliches Herstellungsverfahren für einen Kondensator, insbesondere einen zylindrischen Kondensator. Dabei wird ein Grundkörper mit dielektrischen und elektrisch leitenden Schichten alternierend durch thermisches Spritzen und/oder Besprühen beschichtet und dann gesintert. Gegenüber dem Stand der Technik ergibt sich dadurch eine hohe Design-Variabilität bzgl. Kapazität und Durchbruchspannung und Temperaturbeständigkeit.

Es ist damit Aufgabe der vorliegenden Erfindung, eine mechanische Verbindung zu schaffen, die hohe Kräfte überträgt und elektrisch isolierend wirkt. Je nach Anwendung soll eine derartige Verbindung bis ca. 250 °C Temperatur stand halten. Herkömmliche Materialien, wie es Gummi oder Polyvinylchlorid PVC sind, können nicht verwendet werden. Die erfindungsgemäße Aufgabe ergab sich im Rahmen der Entwicklung, insbesondere des induktiven Heizens für Ölsand. Diesseits sind keine Standardlösungen für diese Aufgabe bekannt.

Die Aufgabe wird durch eine mechanisch tragende und elektrisch isolierende mechanische Verbindung gemäß den Merkmalen des Hauptanspruchs gelöst. Besonders vorteilhaft sind Verwendungen gemäß dem Nebenanspruch.

Gemäß einem ersten Aspekt wird eine mechanisch tragende und elektrisch isolierende mechanische Verbindung eines aus elektrisch leitendem Material bestehenden, entlang einer Achse sich länglich erstreckenden Hohlkörpers, insbesondere eines Hohlzylinders, mit einem aus elektrisch leitendem Material bestehenden, entlang der Achse sich erstreckenden Verbindungselement vorgeschlagen, wobei an einem axialen Ende des länglichen Hohlkörpers ein an diesen um die Achse laufend erzeugtes erstes Gewinde ein an dem Verbindungselement um die Achse laufend erzeugtes zweites Gewinde mechanisch trägt und eine zwischen dem ersten und dem zweiten Gewinde fixierte Isolationsmaterialerstreckung mechanisch trägt und den Hohlkörper von dem Verbindungselement elektrisch isoliert.

Mittels der Verwendung des ersten und des zweiten Gewindes können Zugkräfte am Verbindungselement in Druckkräfte an den Gewinden umgewandelt werden.

Die mechanisch tragende und elektrisch isolierende mechanische Verbindung wirkt somit isolierend und kann große mechanische Kräfte übertragen. Darüber hinaus kann die Isolationsmaterialerstreckung aus einem Stück gefertigt werden. Eine derartige Verbindung kann beliebig oft auseinander- und zusammengebaut werden. Die erfindungsgemäße Verbindung ist eine isolierende Verbindung, die hohe mechanische Kräfte übertragen kann. Eine derartige Verbindung kann insbesondere bei einem induktiven Heizen von Ölsand Anwendung finden. Grundsätzlich sind beliebig weitere Anwendungen möglich. Besonders vorteilhaft können relativ einfach herzustellende Bestandteile für die Verbindung verwendet werden. Die Bestandteile können lösbar sein. Bei Verwendung von Keramik als Material können kleine Teilentladungen vernachlässigt werden.

"Mechanisch tragend" bedeutet hier insbesondere, dass axial wirkende Zug- und/oder Druckkräfte aufgenommen und diesen Stand gehalten werden können. Ein "mechanisch tragendes" Bauteil ist durch tatsächlich auftretende axial wirkende Zug- und/oder Druckkräfte nicht zerstörbar. Axial wirkende Zug- und/oder Druckkräfte können beispielsweise 2 bis 5t entsprechen, und zwar insbesondere auf Induktorgehäuse induktiver Heizungen für die Ölsandförderung.

Axial und radial bedeutet hier mit Bezug auf die Achse A eines sich länglich erstreckenden Hohlkörpers, der beispielsweise ein Induktorgehäuse sein kann, entlang der Achse A beziehungsweise entlang eines Radius von der Achse A.

Gemäß einem zweiten Aspekt wird eine Verwendung der erfindungsgemäßen mechanisch tragenden und elektrisch isolierenden mechanischen Verbindung vorgeschlagen, bei der die Verbindung jeweils ein Verbindungselement an einem axialen Ende eines sich entlang einer Achse länglich erstreckenden Hohlkörpers derart fixiert, dass die Verbindung mit Bezug auf axiale Druck- und/oder Zugkräfte mechanisch stabil und der Hohlkörper zu den Verbindungselementen elektrisch isoliert bleibt.

Mittels der Verwendung des ersten und des zweiten Gewindes können axiale Druck- und/oder Zugkräfte insbesondere am Verbindungselement immer in Druckkräfte an den Gewinden umgewandelt werden.

Weitere vorteilhafte Ausgestaltungen werden in Verbindung mit den Unteransprüchen beansprucht.

Gemäß einer vorteilhaften Ausgestaltung kann die Isolationsmaterialerstreckung drei Unterbereiche aufweisen, und zwar zwei um die Achse sich erstreckende Außenbereiche, die an den axialen Enden eines sich um die und entlang der Achse erstreckenden Mittelbereichs positioniert sind, dessen Oberflächenverlauf in einem Längsschnitt entlang der Achse mindestens zwei zumindest teilweise zur Achse radiale Verläufe aufweist, die mechanisch tragen und elektrisch isolieren.

Gemäß einer weiteren vorteilhaften Ausgestaltung können die zwei Außenbereiche sich im Wesentlichen radial erstrecken und im Wesentlichen radial verlaufende Oberflächen des Hohlkörpers und des Verbindungselements mechanisch tragen und elektrisch isolieren.

Gemäß einer weiteren vorteilhaften Ausgestaltung kann die Isolationsmaterialerstreckung radial zwischen dem ersten und dem zweiten Gewinde auf das erste Gewinde oder zweite Gewinde fixierbar und mit oder auf der Isolationsmaterialerstreckung das andere Gewinde verschraubbar sein.

Gemäß einer weiteren vorteilhaften Ausgestaltung kann die Isolationsmaterialerstreckung als ein Doppelgewindekörper erzeugt sein, dessen beide Gewindegänge zueinander axial versetzt sind.

Gemäß einer weiteren vorteilhaften Ausgestaltung kann die Isolationsmaterialerstreckung als eine Beschichtung des ersten Gewindes und/oder des zweiten Gewindes erzeugt sein.

Gemäß einer weiteren vorteilhaften Ausgestaltung kann die Isolationsmaterialerstreckung axial zwischen dem ersten und dem zweiten Gewinde und radial zwischen einem aus elektrisch leitendem Material bestehenden Äußeren und einem aus elektrisch leitendem Material bestehenden Inneren sich jeweils um die und entlang der Achse erstreckenden Zwischenelement fixierbar sein, wobei das erste Gewinde mit einem Gewinde des äußeren oder inneren Zwischenelements und das zweite Gewinde mit dem Gewindes des anderen Zwischenelements verschraubbar sein kann. "Innen" und "Außen" bedeutet hier radial auf die Achse A bezogen.

Gemäß einer weiteren vorteilhaften Ausgestaltung kann das äußere Zwischenelement sich axial über die Isolationsmaterialerstreckung hinaus in Richtung zum Hohlkörper oder zum Verbindungselement erstrecken und das innere Zwischenelement kann sich axial über die Isolationsmaterialerstreckung hinaus in die entgegengesetzte Richtung erstrecken und die Gewinde der Zwischenelemente können in den sich hinaus erstreckenden Bereichen erzeugt sein.

Gemäß einer weiteren vorteilhaften Ausgestaltung kann die Isolationsmaterialerstreckung als eine Zwischenbuchse oder als ein Zwischenstecker das äußere Zwischenelement an das innere Zwischenelement steckverbinden.

Gemäß einer weiteren vorteilhaften Ausgestaltung kann der Oberflächenverlauf des Mittelbereichs in einem Längsschnitt entlang der Achse mindestens zwei radiale mindestens eine Stufe erzeugende Verläufe aufweisen.

Gemäß einer weiteren vorteilhaften Ausgestaltung können die zwei Außenbereiche mittels eines Klebers ohne Fehlstellen und ohne Luftblasen an den Mittelbereich angeklebt werden.

Gemäß einer weiteren vorteilhaften Ausgestaltung kann das erste Gewinde ein Außengewinde oder ein Innengewinde und das zweite Gewinde ein entsprechendes Gegengewinde sein. Ist das erste Gewinde ein Außengewinde oder ein Innengewinde und das zweite Gewinde ein entsprechendes Gegengewinde, so bedeutet dies, das zweite Gewinde lässt sich mit dem ersten Gewinde verschrauben. Ist das erste Gewinde ein Außengewinde, so ist das zweite Gewinde ein Innengewinde.

Gemäß einer weiteren vorteilhaften Ausgestaltung können die Gewinde des äußeren und des inneren Zwischenelements entsprechende Gegengewinde zum ersten Gewinde und zum zweiten Gewinde sein.

Gemäß einer weiteren vorteilhaften Ausgestaltung kann mindestens eines der Gewinde und/oder die Isolationsmaterialerstreckung zur Vermeidung von Lufteinschlüssen eine metallische Beschichtung aufweisen.

Gemäß einer weiteren vorteilhaften Ausgestaltung kann die Isolationsmaterialerstreckung aus Keramik, PEEK, PFA, PDFA oder Teflon bestehen.

Gemäß einer weiteren vorteilhaften Ausgestaltung kann der Hohlkörper Bestandteil eines Rohrinduktors sein, wobei das Verbindungselement an eine zu dem Hohlkörper elektrisch isolierte kapazitive Bauelementgruppe elektrisch angeschlossen ist, die an dem zweiten axialen Ende des Hohlkörpers an ein weiteres Verbindungselement elektrisch angeschlossen sein kann.

Gemäß einer weiteren vorteilhaften Ausgestaltung kann das weitere Verbindungselement des Hohlkörpers die baugleiche Verbindung zum Hohlkörper wie das Verbindungselement aufweisen.

Gemäß einer weiteren vorteilhaften Ausgestaltung kann das Verbindungselement und das weitere Verbindungselement an dem Hohlkörper abgewandten axialen Ende jeweils ein Innen- oder Außengewinde zum Verschrauben mit einem entsprechenden Gegengewinde eines zusätzlichen Verbindungselements eines zusätzlichen Hohlkörpers aufweisen.

Gemäß einer weiteren vorteilhaften Ausgestaltung kann an den beiden Verbindungselementen des elektrisch isolierenden Hohlkörpers mittels zusätzlicher Verbindungselemente entlang einer jeweiligen Achse sich länglich erstreckende zusätzliche Hohlkörper mechanisch und elektrisch anschließbar sein.

Gemäß einer weiteren vorteilhaften Ausgestaltung können die zusätzlichen Verbindungselemente und deren zusätzliche Hohlkörper aus elektrisch leitendem Material bestehen und derart miteinander elektrisch verbindbar sein, dass der jeweilige zusätzliche Hohlkörper nicht elektrisch isoliert ist.

Gemäß einer weiteren vorteilhaften Ausgestaltung können die Hohlkörper kapazitive Bauelementgruppen aufweisen und in eine Reihe von angeschlossenen zusätzlichen Hohlkörpern mechanisch und elektrisch zwischenschaltbar sein.

Gemäß einer weiteren vorteilhaften Ausgestaltung können alle Hohlkörper als jeweilige Gehäuse einer induktiven Heizschleife eines Rohrinduktors, insbesondere für die Ölsandförderung, in ein Reservoir eingebracht werden.

Die Erfindung wird anhand von Ausführungsbeispielen in Verbindung mit den Figuren näher beschrieben. Es zeigen:
- Figur 1: ein Ausführungsbeispiel eines erfindungsgemäßen Hohlkörpers;
- Figur 2: ein erstes Ausführungsbeispiel einer erfindungsgemäßen Verbindung;
- Figur 3: ein zweites Ausführungsbeispiel einer erfindungsgemäßen Verbindung; und
- Figur 4: ein Ausführungsbeispiel eines erfindungsgemäßen Verfahrens.

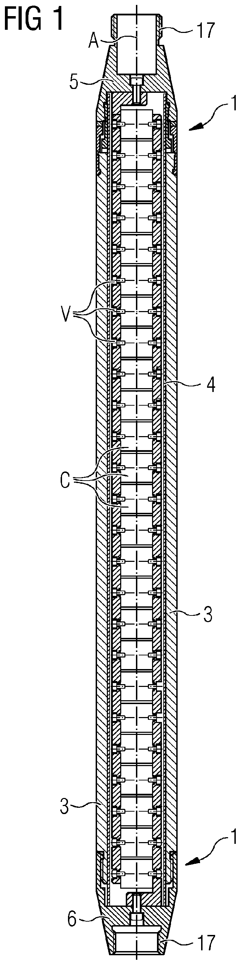

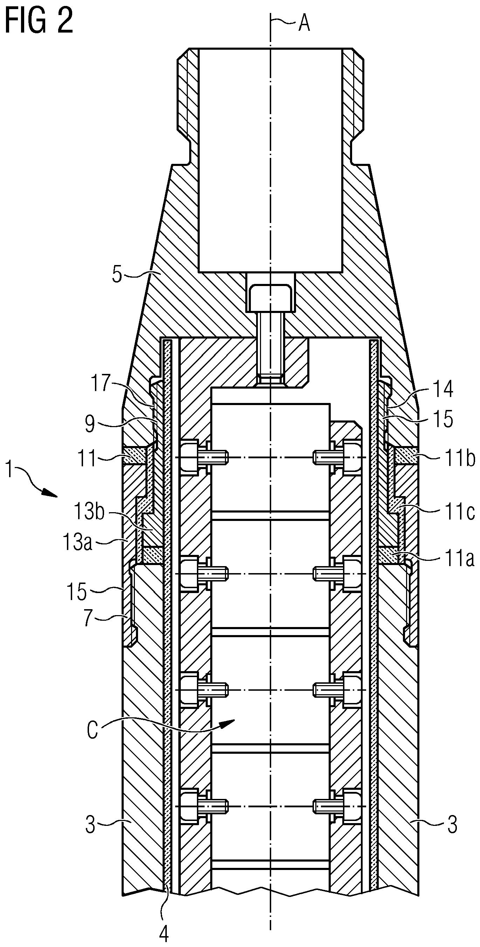

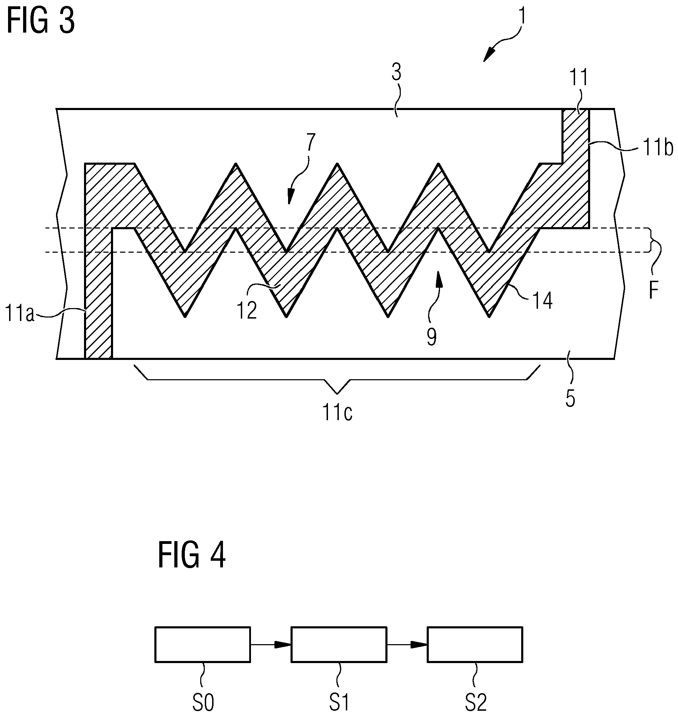

Figur 1 zeigt ein Ausführungsbeispiel eines erfindungsgemäßen Hohlkörpers 3. Figur 1 zeigt den aus elektrisch leitendem Material bestehenden, entlang einer Achse A sich länglich erstreckenden Hohlkörper 3, der vorteilhaft ein Hohlzylinder sein kann und ein Induktorgehäuse eines Rohrinduktors bereitstellen kann. Figur 1 zeigt insbesondere auf dessen rechter Seite eine mechanisch tragende und elektrisch isolierende mechanische Verbindung 1 des Hohlkörpers 3 mit einem aus elektrisch leitendem Material bestehenden, entlang der Achse A sich erstreckenden Verbindungselement 5. Das Verbindungselement 5 zeigt an dem dem Hohlkörper 3 abgewandten axialen Ende ein Innengewinde 17 zum Verschrauben mit einem entsprechenden Gegengewinde eines nicht dargestellten zusätzlichen Verbindungselements eines nicht dargestellten zusätzlichen Hohlkörpers. Der Hohlkörper 3 kann Bestandteil beispielsweise eines Rohrinduktors sein, wobei das Verbindungselement 5 an eine zu dem Hohlkörper 3 elektrisch isolierte kapazitive Bauelementgruppe C elektrisch angeschlossen ist, die an dem zweiten axialen linken Ende des Hohlkörpers 3 an ein weiteres Verbindungselement 6 elektrisch angeschlossen ist. V bezeichnet elektrische Verbindungen zwischen den einzelnen Kapazitäten C. Die Kapazitäten C, deren elektrische Verbindungen V beziehungsweise Kontakte sind zum Hohlkörper 3 elektrisch isoliert, und zwar beispielsweise mittels eines elektrisch isolierenden Hohlkörpers, insbesondere Hohlzylinders 4, zwischen Hohlzylinder 3 und der kapazitiven Bauelementgruppe C. Auf der linken Seite des Hohlkörpers 3 weist das weitere Verbindungselement 6 ein Innengewinde 17 zum Verschrauben mit dem entsprechenden Gegengewinde eines nicht dargestellten zusätzlichen Verbindungselementes eines nicht darstellten zusätzlichen Hohlkörpers auf der linken Seite auf. Damit der Hohlkörper 3 elektrisch isoliert ist, weist das weitere Verbindungselement 6 des Hohlkörpers 3 die baugleiche Verbindung 1 zum Hohlkörper 3 wie das Verbindungselement 5 auf. Die mechanisch tragende und elektrisch isolierende mechanische Verbindung 1 an dem rechten axialen Ende des länglichen Hohlkörpers 3 weist ein an diesem um die Achse A laufend erzeugtes erstes Gewinde 7 auf, das ein an dem Verbindungselement 5 und die Achse A laufend erzeugtes zweites Gewinde 9 mechanisch trägt, wobei eine zwischen dem ersten und dem zweiten Gewinde 7 und 9 fixierte Isolationsmaterialerstreckung 11 zusätzlich mechanisch trägt und den Hohlkörper 3 von dem Verbindungselement 5 elektrisch isoliert. Figuren 2 und 3 zeigen zwei Ausführungsformen einer erfindungsgemäßen mechanisch tragenden elektrisch isolierenden mechanischen Verbindung 1. Figur 1 zeigt die Verwendung des Hohlkörpers 3 als ein Induktorgehäuse eines Rohrinduktors. In dem Induktorgehäuse sind die in reih- oder parallelgeschalteten Kapazitäten C untergebracht.

Figur 2 zeigt ein erstes Ausführungsbeispiel einer erfindungsgemäßen mechanisch tragenden, elektrisch isolierenden mechanischen Verbindung 1. Die Darstellung gemäß Figur 2 kann als Vergrößerung des rechten axialen Endes des Hohlkörpers 3 gemäß Figur 1 angenommen werden. Zwischen Hohlzylinder 3 und der kapazitiven Bauelementgruppe C ist ein elektrisch isolierender Hohlzylinder 4 angeordnet. Figur 2 zeigt, dass eine Isolationsmaterialerstreckung 11 axial zwischen einem ersten und einem zweiten Gewinde 7 und 9 sowie radial zwischen einem aus elektrisch leidendem Material bestehenden Äußeren und einem aus elektrisch leitendem Material bestehenden Inneren sich jeweils um die und entlang der Achse A erstreckenden Zwischenelement 13a und 13b fixiert ist. Das erste Gewinde 7 ist hier mit einem Gewinde des äußeren Zwischenelementes 13a verschraubt. Das zweite Gewinde 9 ist mit einem Gewinde des inneren Zwischenelements 13b verschraubt. Die Isolationsmaterialerstreckung 11 weist drei Unterbereiche auf, und zwar zwei um die Achse A sich erstreckende Außenbereiche 11a und 11b, die an dem axialen Ende eines sich um die und entlang der Achse A erstreckenden Mittelbereichs 11c fixiert sind, dessen Oberflächenverlauf in einem Längsschnitt entlang der Achse mindestens zwei zumindest teilweise zur Achse radiale Verläufe aufweist, die mechanisch tragend und elektrisch isolierend wirken. Dieser Mittelbereich 11c kann vorteilhaft Druck- und Zugkräfte entlang der Achse A aufnehmen, die mittels des Mittelbereichs 11c immer in Druckkräfte umgewandelt werden können. Die elektrische Isolierung bleibt dabei erhalten. Die zwei Außenbereiche 11a und 11b sind im Wesentlichen radial verlaufend und tragen mechanisch und isolieren elektrisch radial verlaufende Oberflächen des Hohlkörpers 3 und des Verbindungselementes 5. Beispielhaft ist hier die Isolationsmaterialerstreckung 11 als eine Zwischenbuchse ausgestaltet, die das äußere Zwischenelement 13a und das innere Zwischenelement 13b steckverbindet. Der Verlauf der Oberfläche des Mittelbereichs 11c in einem Längsschnitt entlang der Achse A ist stufenförmig. Entsprechend können mittels dieser Stufe mechanische Druck- und Zugkräfte aufgenommen und in Druckkräfte gewandelt werden. Die zwei Außenbereiche 11a und 11b können mittels eines Klebers ohne Fehlstellen und ohne Luftblasen an den Mittelbereich 11c angeklebt werden. Figur 2 zeigt, dass das äußere Zwischenelement 13a sich axial über die Isolationsmaterialerstreckung 11 hinaus in Richtung zu dem Hohlkörper 3 erstreckt. Gemäß Figur 2 erstreckt sich das innere Zwischenelement 13b axial über die Isolationsmaterialerstreckung 11 hinaus in Richtung zu dem Verbindungselement 5. Die Gewinde der Zwischenelemente 13a und 13b sind jeweils in den sich hinaus erstreckenden Bereichen 15 erzeugt. Bezugszeichen C kennzeichnet die kapazitiven Elemente, die elektrisch an das elektrisch leitende Verbindungselement 5 angeschlossen sind. Die Kapazitäten C sind zum Hohlkörper 3 elektrisch isoliert. Gemäß Figur 2 können das äußere und das innere Zwischenelement 13a und 13b als zylinderförmige Aluminiumteile geschaffen sein, die mittels einer als Zwischenbuchse wirkenden Isolationsmaterialerstreckung 11 derart verbunden sind, dass die Isolationsmaterialerstreckung 11 lediglich auf Druck oder Zug belastet werden kann. Auf diese Weise wird eine stabile Verbindung geschaffen, wie es bereits experimentell bestätigt werden konnte. Nachteiliger Weise kann die Isolationsmaterialerstreckung 11 nicht aus einem Teil gefertigt werden. Während des Einbaus müssen die verschiedenen Teile, insbesondere die zwei Außenbereiche 11a und 11b sowie der Mittelbereich 11c, der Isolationsmaterialerstreckung 11 geklebt werden, um Kriechstrecken für Strom beziehungsweise Teilentladungen zu vermeiden. Des Weiteren dürfen keine Fehlstellen oder keine Luftblasen im Kleber vorhanden sein, da dies sonst zum Versagen der elektrischen Isolation der Isolationsmaterialerstreckung 11 führen würde. Zur Vermeidung von Lufteinschlüssen, insbesondere bei dem Verkleben, können Gewinde und/oder die Isolationsmaterialerstreckung 11 eine metallische Beschichtung 14 oder Metallisierung aufweisen.

Figur 3 zeigt ein zweites Ausführungsbeispiel einer erfindungsgemäßen mechanisch tragenden und elektrisch isolierenden mechanischen Verbindung 1. Ebenso kann Figur 3 als eine Vergrößerung der rechten Seite des Hohlkörpers 3 gemäß Figur 1 betrachtet werden. Gemäß dieser Ausführungsform ist eine Isolationsmaterialerstreckung 11 radial zwischen einem ersten und einem zweiten Gewinde 7 und 9 auf das erste Gewinde 7 fixiert worden, wobei dann auf die Isolationsmaterialerstreckung 11 das zweite Gewinde 9 verschraubt worden ist. Grundsätzlich kann ein Verschrauben ebenso in der umgekehrten Reihenfolge ausgeführt werden. Figur 3 zeigt, dass die Isolationsmaterialerstreckung 11 als ein einstückiger Doppelgewindekörper 12 erzeugt ist, dessen beide Gewindegänge zueinander axial versetzt sind. Grundsätzlich kann die Isolationsmaterialerstreckung 11 alternativ ebenso als eine Beschichtung eines jeweiligen ersten Gewindes 7 und/oder eines zweiten Gewindes 9 erzeugt sein. Auch Figur 3 stellt dar, dass die Isolationsmaterialerstreckung 11 drei Unterbereiche aufweisen kann, und zwar zwei um die Achse A sich erstreckende Außenbereiche 11a und 11b, die an den axialen Enden eines sich um die und entlang der Achse A erstreckenden Mittelbereichs 11c angeordnet sind, dessen Oberflächenverlauf in einem Längsschnitt entlang der Achse mindestens zwei zumindest teilweise zur Achse A radiale Verläufe aufweist, die mechanisch tragend und elektrisch isolierend wirken. Das mechanische Tragen bezieht sich hier auf Druck- und Zugkräfte F, die entlang der hier nicht dargestellten Achse A wirken. Figur 3 zeigt, dass die zwei Außenbereiche 11a und 11b sich radial erstrecken und radial verlaufende Oberflächen des Hohlkörpers 3 und des Verbindungselementes 5 mechanisch tragen und elektrisch isolieren. Zur Vermeidung von Lufteinschlüssen, insbesondere bei einem Verkleben, können Gewinde und/oder die Isolationsmaterialerstreckung 11 eine metallische Beschichtung 14 oder Metallisierung aufweisen. Figur 3 zeigt, dass eine erfindungsgemäße Verbindung 1 mittels einem mit Keramik beschichteten Gewinde 7 und/oder 9 (dies ist eher für kleinere elektrische Spannungen geeignet) oder über einen Keramik-Körper, der als ein Doppelgewinde 12 ausgeführt sein kann, hergestellt werden kann. Bei Letzterem ist es wichtig, dass sich die Gewindegänge überlappen. Nur so ist gewährleistet, dass die Keramik immer auf Druck belastet wird und somit auch stabil bleibt. Als Einsatzmaterial kann für hohe Temperaturen Keramik oder für niedrige Temperaturen PEEK (Polyetheretherketon) oder PFA (Perfluoralkoxy) verwendet werden. Im Fall von Keramik würden kleinere Teilentladungen oder Kriechströme durch Fehlstellen oder Lufteinschlüsse keine Probleme bereiten.

Die Ausführungsbeispiele gemäß den Figuren 1, 2 und 3 von hohlzylinderförmigen Hohlkörpern 3 können mit den erfindungsgemäßen mechanisch tragenden und elektrisch isolierenden mechanischen Verbindungen 1 in eine Serie von angeschlossenen zusätzlichen Hohlkörpern mechanisch und elektrisch zwischengeschaltet werden, wobei alle Hohlkörper als jeweilige Gehäuse einer induktiven Heizschleife eines Rohrinduktors, insbesondere für die Ölsandförderung, in ein Reservoir eingebracht werden können. Grundsätzlich können die erfindungsgemäßen Verbindungen 1 überall da verwendet werden, wo Gehäuse elektrisch isoliert sein sollen und deren Inneres elektrisch angeschlossen werden soll.

Figur 4 zeigt ein Ausführungsbeispiel eines erfindungsgemäßen Verfahrens. Gemäß dem erfindungsgemäßen Verfahren zur mechanisch tragenden und elektrisch isolierenden mechanischen Verbindung 1 wird in einem ersten Schritt S1 jeweils ein Verbindungselement 5, 6 an einem axialen Ende eines sich entlang einer Achse A länglich erstreckenden Hohlkörpers 3 derart fixiert, dass die Verbindung 1 mit Bezug auf axiale Druck- und/oder Zugkräfte F mechanisch stabil und der Hohlkörper 3 zu den Verbindungselementen 5, 6 elektrisch isoliert bleibt. Vor diesem ersten Schritt S1 wird in einem Anfangsschritt S0 in den Hohlkörper 3 eine elektrisch isolierte, kapazitive Bauelementgruppe C integriert. Anschließend wird in einem zweiten Schritt S2 der Hohlkörper 3 in eine Reihe von miteinander mechanisch und elektrisch angeschlossenen zusätzlichen Hohlkörpern ohne kapazitive Bauelementgruppen mechanisch und elektrisch zwischengeschaltet (S2). Für die Verwendung der erfindungsgemäßen Vorrichtung und der dazugehörigen Verfahren wird hier explizit die Ölsandförderung genannt, wobei für die Induktionsheizung Frequenzen insbesondere im Bereich von 10KHz bis 200KHz angewendet werden.

## Patentansprüche

1. Mechanisch tragende und elektrisch isolierende mechanische Verbindung (1) eines aus elektrisch leitendem Material bestehenden, entlang einer Achse (A) sich länglich erstreckenden Hohlkörpers (3), insbesondere eines Hohlzylinders, mit einem aus elektrisch leitendem Material bestehenden, entlang der Achse sich erstreckenden Verbindungselement (5),
**dadurch gekennzeichnet, dass**
an einem axialen Ende des länglichen Hohlkörpers (3), ein an diesem um die Achse laufend erzeugtes erstes Gewinde (7) ein an dem Verbindungselement (5) um die Achse laufend erzeugtes zweites Gewinde (9) mechanisch trägt und eine zwischen dem ersten und dem zweiten Gewinde (7, 9) fixierte Isolationsmaterialerstreckung (11) zusätzlich mechanisch trägt und den Hohlkörper (3) von dem Verbindungselement (5) elektrisch isoliert.

2. Mechanisch tragende und elektrisch isolierende mechanische Verbindung (1) nach Anspruch 1,
**dadurch gekennzeichnet, dass**
die Isolationsmaterialerstreckung (11) drei Unterbereiche aufweist, und zwar zwei um die Achse sich erstreckende Außenbereiche (11a, 11b), die an den axialen Enden eines sich um die und entlang der Achse erstreckenden Mittelbereichs (11c) positioniert sind, dessen Oberflächenverlauf in einem Längsschnitt entlang der Achse mindestens zwei zumindest teilweise zur Achse radiale Verläufe aufweist, die mechanisch tragen und elektrisch isolieren.

3. Mechanisch tragende und elektrisch isolierende mechanische Verbindung (1) nach Anspruch 2,
**dadurch gekennzeichnet, dass**
die zwei Außenbereiche (11a, 11b) sich im Wesentlichen radial erstrecken und im Wesentlichen radial verlaufende Oberflächen des Hohlkörpers (3) und des Verbindungselements (5) mechanisch tragen und elektrisch isolieren.

4. Mechanisch tragende und elektrisch isolierende mechanische Verbindung (1) nach Anspruch 1, 2 oder 3,
**dadurch gekennzeichnet, dass**
die Isolationsmaterialerstreckung (11) radial zwischen dem ersten und dem zweiten Gewinde (7, 9) auf das erste Gewinde (7) oder zweite Gewinde (9) fixierbar und mit oder auf der Isolationsmaterialerstreckung (11) das andere Gewinde (9; 7) verschraubbar ist.

5. Mechanisch tragende und elektrisch isolierende mechanische Verbindung (1) nach Anspruch 4,
**dadurch gekennzeichnet, dass**
die Isolationsmaterialerstreckung (11) als ein Doppelgewindekörper (12) erzeugt ist, dessen beide Gewindegänge zueinander axial versetzt sind.

6. Mechanisch tragende und elektrisch isolierende mechanische Verbindung (1) nach Anspruch 4,
**dadurch gekennzeichnet, dass**
die Isolationsmaterialerstreckung (11) als eine Beschichtung des ersten Gewindes (7) und/oder des zweiten Gewindes (9) erzeugt ist.

7. Mechanisch tragende und elektrisch isolierende mechanische Verbindung (1) nach Anspruch 1, 2 oder 3,
**dadurch gekennzeichnet, dass**
die Isolationsmaterialerstreckung (11) axial zwischen dem ersten und dem zweiten Gewinde (7, 9) und radial zwischen einem aus elektrisch leitendem Material bestehenden äußeren und einem aus elektrisch leitendem Material bestehenden inneren, sich jeweils um die und entlang der Achse erstreckenden Zwischenelement (13a, 13b) fixierbar ist, wobei das erste Gewinde (7) mit einem Gewinde des äußeren oder inneren Zwischenelements (13a; 13b) und das zweite Gewinde (9) mit dem Gewinde des anderen Zwischenelements (13b; 13a) verschraubbar ist.

8. Mechanisch tragende und elektrisch isolierende mechanische Verbindung (1) nach Anspruch 7,
**dadurch gekennzeichnet, dass**
das äußere Zwischenelement (13a) sich axial über die Isolationsmaterialerstreckung (11) hinaus in Richtung zum Hohlkörper (3) oder zum Verbindungselement (5) erstreckt und das innere Zwischenelement (13b) sich axial über die Isolationsmaterialerstreckung (11) hinaus in die entgegengesetzte Richtung erstreckt und die Gewinde der Zwischenelemente (13a, 13b) in den sich hinaus erstreckenden Bereichen (15) erzeugt sind.

9. Mechanisch tragende und elektrisch isolierende mechanische Verbindung (1) nach Anspruch 7 oder 8,
**dadurch gekennzeichnet, dass**
die Isolationsmaterialerstreckung (11) als eine Zwischenbuchse oder als ein Zwischenstecker das äußere Zwischenelement (13a) an das innere Zwischenelement (13b) steckverbindet.

10. Mechanisch tragende und elektrisch isolierende mechanische Verbindung (1) nach Anspruch 7, 8 oder 9,
**dadurch gekennzeichnet, dass**
der Oberflächenverlauf des Mittelbereichs (11c) in einem Längsschnitt entlang der Achse mindestens zwei radiale mindestens eine Stufe erzeugende Verläufe aufweist.

11. Mechanisch tragende und elektrisch isolierende mechanische Verbindung (1) nach Anspruch 7, 8, 9 oder 10,
**dadurch gekennzeichnet, dass**
die zwei Außenbereiche (11a, 11b) mittels eines Klebers ohne Fehlstellen und ohne Luftblasen an den Mittelbereich (11c) angeklebt werden.

12. Mechanisch tragende und elektrisch isolierende mechanische Verbindung (1) nach einem der vorhergehenden Ansprüche,
**dadurch gekennzeichnet, dass**
das erste Gewinde (7) ein Außengewinde oder ein Innengewinde und das zweite Gewinde (9) ein entsprechendes Gegengewinde ist.

13. Mechanisch tragende und elektrisch isolierende mechanische Verbindung (1) nach Anspruch 12,
**dadurch gekennzeichnet, dass**
die Gewinde des äußeren und des inneren Zwischenelements (13a; 13b) entsprechende Gegengewinde zum ersten Gewinde (7) und zum zweiten Gewinde (9) sind.

14. Mechanisch tragende und elektrisch isolierende mechanische Verbindung (1) nach einem der vorhergehenden Ansprüche,
**dadurch gekennzeichnet, dass**
mindestens eines der Gewinde (7, 9, 13a, 13b) und/oder die Isolationsmaterialerstreckung (11) zur Vermeidung von Lufteinschlüssen eine metallische Beschichtung (14) oder Metallisierung aufweist.

15. Mechanisch tragende und elektrisch isolierende mechanische Verbindung (1) nach einem der vorhergehenden Ansprüche,
**dadurch gekennzeichnet, dass**
die Isolationsmaterialerstreckung (11) aus Keramik, PEEK (Polyetheretherketon), PFA (Perfluoralkoxy) oder Teflon besteht.

16. Mechanisch tragende und elektrisch isolierende mechanische Verbindung (1) nach einem der vorhergehenden Ansprüche,
**dadurch gekennzeichnet, dass**
der Hohlkörper (3) Bestandteil eines Rohrinduktors ist, wobei das Verbindungselement (5) an eine zu dem Hohlkörper (3) elektrisch isolierte kapazitive Bauelementgruppe (C) elektrisch angeschlossen ist, die an dem zweiten axialen Ende des Hohlkörpers (3) an ein weiteres Verbindungselement (6) elektrisch angeschlossen ist.

17. Mechanisch tragende und elektrisch isolierende mechanische Verbindung (1) nach einem der vorhergehenden Ansprüche 16,
**dadurch gekennzeichnet, dass**
das weitere Verbindungselement (6) des Hohlkörpers (3) die baugleiche Verbindung (1) zum Hohlkörper (3) wie das Verbindungselement (5) aufweist.

18. Mechanisch tragende und elektrisch isolierende mechanische Verbindung (1) nach einem der vorhergehenden Ansprüche 16 oder 17,
**dadurch gekennzeichnet, dass**
das Verbindungselement (5) und das weitere Verbindungselement (6) an deren dem Hohlkörper (3) abgewandten axialen Enden, jeweils ein Innen- oder Außengewinde (17) zum Verschrauben mit einem entsprechenden Gegengewinde eines zusätzlichen Verbindungselements eines zusätzlichen Hohlkörpers aufweist.

19. Verfahren zur mechanisch tragenden und elektrisch isolierenden mechanischen Verbindung (1) nach einem der vorhergehenden Ansprüche,
**dadurch gekennzeichnet, dass**
die Verbindung (1) jeweils ein Verbindungselement (5, 6) an einem axialen Ende eines sich entlang einer Achse (A) länglich erstreckenden Hohlkörpers (3) derart fixiert (S1), dass die Verbindung (1) mit Bezug auf axiale Druck- und/oder Zugkräfte (F) mechanisch stabil und der Hohlkörper (3) zu den Verbindungselementen (5, 6) elektrisch isoliert bleibt.

20. Verfahren nach Anspruch 19,
**dadurch gekennzeichnet, dass**
in den Hohlkörper (3) von diesem elektrisch isolierte kapazitive Bauelementgruppen (C) integriert worden sind (S0) und der Hohlkörper (3) in eine Reihe von miteinander mechanisch und elektrisch angeschlossenen zusätzlichen Hohlkörpern ohne kapazitive Bauelementgruppen mechanisch und elektrisch zwischengeschaltet wird (S2).

21. Verfahren nach Anspruch 20,
**dadurch gekennzeichnet, dass**
ein jeweiliger zusätzlichen Hohlkörper sich entlang einer jeweiligen Achse (A) länglich erstreckt und direkt oder indirekt an einem der beiden Verbindungselemente (5, 6) des elektrisch isolierten Hohlkörpers (3) mittels eines jeweiligen zusätzlichen Verbindungselements mechanisch und elektrisch angeschlossen wird (S2).

22. Verfahren nach Anspruch 21,
**dadurch gekennzeichnet, dass**
die zusätzlichen Verbindungselemente und deren zusätzliche Hohlkörper aus elektrisch leitendem Material bestehen und miteinander elektrisch verbunden werden (S2).

23. Verfahren nach Anspruch 22,
**dadurch gekennzeichnet, dass**
alle Hohlkörper als jeweilige Gehäuse einer induktiven Heizschleife eines Rohrinduktors, insbesondere für die Ölsandförderung, in ein Reservoir eingebracht werden (S3).

## Claims

1. Mechanical-load bearing and electrically isolating mechanical connection (1) of a hollow body (3), in particular a hollow cylinder, which is composed of an electrically conducting material and extends longitudinally along an axis (A), having a connection element (5) which is composed of an electrically conducting material and extends along the axis,
**characterized in that**
at one axial end of the elongate hollow body (3) a first thread (7), which is produced so as to run about the axis thereon, mechanically supports a second thread (9), which is produced so as to run about the axis on the connection element (5), and an insulation-material extent (11) which is fixed between the first and the second thread (7, 9) lends additional mechanical support and electrically isolates the hollow body (3) from the connection element (5).

2. Mechanical-load bearing and electrically isolating mechanical connection (1) according to Claim 1,
**characterized in that**
the insulation-material extent (11) has three sub-regions, specifically two external regions (11a, 11b) which extend about the axis and which are positioned at the axial ends of a central region (11c) which extends about and along the axis and the surface area profile of which in a longitudinal section along the axis has at least two profiles which at least partially are radial in relation to the axis and which lend mechanical support and are electrically isolating.

3. Mechanical-load bearing and electrically isolating mechanical connection (1) according to Claim 2,
**characterized in that**
the two external regions (11a, 11b) extend in a substantially radial manner and mechanically support and electrically isolate surfaces of the hollow body (3) and of the connection element (5) that run in a substantially radial manner.

4. Mechanical-load bearing and electrically isolating mechanical connection (1) according to Claim 1, 2, or 3,
**characterized in that**
the insulation-material extent (11), radially between the first and the second thread (7, 9), is fixable onto the first thread (7) or second thread (9), and together with the insulation-material extent (11), or thereon, is screwable onto the other thread (9; 7).

5. Mechanical-load bearing and electrically isolating mechanical connection (1) according to Claim 4,
**characterized in that**
the insulation-material extent (11) is produced as a double-threaded body (12), the two thread turns of which are axially offset in relation to one another.

6. Mechanical-load bearing and electrically isolating mechanical connection (1) according to Claim 4,
**characterized in that**
the insulation-material extent (11) is produced as a coating of the first thread (7) and/or of the second thread (9).

7. Mechanical-load bearing and electrically isolating mechanical connection (1) according to Claim 1, 2, or 3,
**characterized in that**
the insulation-material extent (11) is fixable axially between the first and the second thread (7, 9) and radially between an outer intermediate element (13a), which is composed of an electrically conducting material, and an inner intermediate element (13b), which is composed of an electrically conducting material, which intermediate elements (13a, 13b) in each case extend about and along the axis, wherein the first thread (7) is screwable to a thread of the outer or inner intermediate element (13a; 13b), and the second thread (9) is screwable to the thread of the other intermediate element (13b; 13a).

8. Mechanical-load bearing and electrically isolating mechanical connection (1) according to Claim 7,
**characterized in that**
the outer intermediate element (13a) extends axially beyond the insulation-material extent (11) in the direction toward the hollow body (3) or toward the connection element (5), and the inner intermediate element (13b) extends axially beyond the insulation-material extent (11) in the opposite direction, and the threads of the intermediate elements (13a, 13b) are produced in the regions (15) extending therebeyond.

9. Mechanical-load bearing and electrically isolating mechanical connection (1) according to Claim 7 or 8,
**characterized in that**
the insulation-material extent (11), as an intermediate sleeve or as an intermediate plug, plug-connects the outer intermediate element (13a) to the inner intermediate element (13b).

10. Mechanical-load bearing and electrically isolating mechanical connection (1) according to Claim 7, 8, or 9,
**characterized in that**
the surface area profile of the central region (11c) in a longitudinal section along the axis has at least two radial profiles producing at least one step.

11. Mechanical-load bearing and electrically isolating mechanical connection (1) according to Claim 7, 8, 9, or 10,
**characterized in that**
the two external regions (11a, 11b) are adhesively bonded to the central region (11c) by means of an adhesive, so as to be without defective spots and without air bubbles.

12. Mechanical-load bearing and electrically isolating mechanical connection (1) according to one of the preceding claims,
**characterized in that**
the first thread (7) is an external thread or an internal thread, and the second thread (9) is a corresponding mating thread.

13. Mechanical-load bearing and electrically isolating mechanical connection (1) according to Claim 12,
**characterized in that**
the threads of the outer and of the inner intermediate elements (13a; 13b) are corresponding mating threads of the first thread (7) and of the second thread (9).

14. Mechanical-load bearing and electrically isolating mechanical connection (1) according to one of the preceding claims,
**characterized in that**
at least one of the threads (7, 9, 13a, 13b) and/or the insulation-material extent (11), in order to avoid air pockets, have/has a metallic coating (14) or a plating.

15. Mechanical-load bearing and electrically isolating mechanical connection (1) according to one of the preceding claims,
**characterized in that**
the insulation-material extent (11) is composed of ceramics, PEEK (polyether ether ketone), PFA (perfluoroalkoxy), or Teflon.

16. Mechanical-load bearing and electrically isolating mechanical connection (1) according to one of the preceding claims,
**characterized in that**
the hollow body (3) is a component part of a tubular inductor, wherein the connection element (5) is electrically connected to as capacitive assembly (C) electrically isolated assembly which from the hollow body (3) at the second axial end of the hollow body (3) is electrically connected to a further connection element (6).

17. Mechanical-load bearing and electrically isolating mechanical connection (1) according to Claim 16,
**characterized in that**
the further connection element (6) of the hollow body (3) has the identically constructed connection (1) to the hollow body (3) as the connection element (5).

18. Mechanical-load bearing and electrically isolating mechanical connection (1) according to one of preceding Claims 16 or 17,
**characterized in that**
the connection element (5) and the further connection element (6), on the axial ends thereof that face away from the hollow body (3), in each case have one internal or external thread (17) for screwing to a corresponding mating thread of an additional connection element of an additional hollow body.

19. Method for the mechanical-load bearing and electrically isolating mechanical connection (1) according to one of the preceding claims,
**characterized in that**
the connection (1) fixes (S1) in each case one connection element (5, 6) to an axial end of a hollow body (3) which extends longitudinally along an axis (A) in such a manner that the connection (1) in terms of axial compression forces and/or tensile forces (F) remains mechanically stable and that the hollow body (3) in relation to the connection elements (5, 6) remains electrically isolated.

20. Method according to Claim 19,
**characterized in that**
capacitive assemblies (C) which are electrically isolated from the hollow body (3) have been integrated therein (S0), and that the hollow body (3) is mechanically and electrically interdisposed (S2) in a series of mechanically and electrically interconnected additional hollow bodies without capacitive assemblies.

21. Method according to Claim 20,
**characterized in that**
a respective additional hollow body extends longitudinally along a respective axis (A) and by means of a respective additional connection element is mechanically and electrically directly or indirectly connected (S2) to one of the two connection elements (5, 6) of the electrically isolated hollow body (3).

22. Method according to Claim 21,
**characterized in that** the additional connection elements and the additional hollow bodies thereof are composed of an electrically conducting material and are electrically interconnected (S2).

23. Method according to Claim 22,
**characterized in that**
all hollow bodies are incorporated (S3) in a reservoir as respective housings of an inductive heating loop of a tubular inductor, in particular for oil sand production.

## Revendications

1. Liaison mécanique (1) mécaniquement porteuse et électriquement isolante entre un corps creux (3), et plus particulièrement un cylindre creux, qui se compose d'une matière électriquement conductrice et s'étend longitudinalement le long d'un axe (A), et un élément de liaison (5) qui se compose d'une matière électriquement conductrice et s'étend le long de l'axe, **caractérisée en ce que**, en une extrémité axiale du corps creux allongé (3), un premier filetage (7) réalisé sur celui-ci tout autour de l'axe porte mécaniquement un deuxième filetage (9) réalisé sur l'élément de liaison (5) tout autour de l'axe et porte en outre mécaniquement une extension de matière isolante (11) fixée entre le premier et le deuxième filetage (7, 9) et isole électriquement le corps creux (3) par rapport à l'élément de liaison (5).

2. Liaison mécanique (1) mécaniquement porteuse et électriquement isolante selon la revendication 1, **caractérisée en ce que** l'extension de matière isolante (11) comporte trois sous-zones, à savoir deux zones extérieures (11a, 11b) qui s'étendent autour de l'axe, qui sont positionnées aux extrémités axiales d'une zone centrale (11c) qui s'étend autour et le long de l'axe et dont le tracé de surface présente, dans une coupe longitudinale le long de l'axe, au moins deux tracés au moins en partie radiaux par rapport à l'axe qui portent mécaniquement et isolent électriquement.

3. Liaison mécanique (1) mécaniquement porteuse et électriquement isolante selon la revendication 2, **caractérisée en ce que** les deux zones extérieures (11a, 11b) s'étendent sensiblement radialement et portent mécaniquement et isolent électriquement des surfaces sensiblement radiales du corps creux (3) et de l'élément de liaison (5).

4. Liaison mécanique (1) mécaniquement porteuse et électriquement isolante selon la revendication 1, 2 ou 3, **caractérisée en ce que** l'extension de matière isolante (11) peut être fixée radialement entre le premier et le deuxième filetage (7, 9) sur le premier filetage (7) ou le deuxième filetage (9) et l'autre filetage (9 ; 7) peut être vissé à ou sur l'extension de matière isolante (11).

5. Liaison mécanique (1) mécaniquement porteuse et électriquement isolante selon la revendication 4, **caractérisée en ce que** l'extension de matière isolante (11) est réalisée sous la forme d'un corps à double filetage (12) dont les deux filets sont décalés axialement entre eux.

6. Liaison mécanique (1) mécaniquement porteuse et électriquement isolante selon la revendication 4, **caractérisée en ce que** l'extension de matière isolante (11) est réalisée sous la forme d'un revêtement du premier filetage (7) et/ou du deuxième filetage (9).

7. Liaison mécanique (1) mécaniquement porteuse et électriquement isolante selon la revendication 1, 2 ou 3, **caractérisée en ce que** l'extension de matière isolante (11) peut être fixée axialement entre le premier et le deuxième filetage (7, 9) et radialement entre des éléments intermédiaires (13a, 13b) extérieur, composé d'une matière électriquement conductrice, et intérieur, composé d'une matière électriquement conductrice, qui s'étendent respectivement autour et le long de l'axe, le premier filetage (7) pouvant être vissé à un filetage de l'élément intermédiaire (13a ; 13b) extérieur ou intérieur et le deuxième filetage (9), au filetage de l'autre élément intermédiaire (13b ; 13a).

8. Liaison mécanique (1) mécaniquement porteuse et électriquement isolante selon la revendication 7, **caractérisée en ce que** l'élément intermédiaire extérieur (13a) s'étend axialement au-delà de l'extension de matière isolante (11) en direction du corps creux (3) ou de l'élément de liaison (5) et **en ce que** l'élément intermédiaire intérieur (13b) s'étend axialement au-delà de l'extension de matière isolante (11) dans le sens opposé et **en ce que** les filetages des éléments intermédiaires (13a, 13b) sont réalisés dans les zones (15) qui s'étendent au-delà de l'extension de matière isolante (11).

9. Liaison mécanique (1) mécaniquement porteuse et électriquement isolante selon la revendication 7 ou 8, **caractérisée en ce que** l'extension de matière isolante (11) assemble par emboîtement, en tant que douille intermédiaire ou fiche intermédiaire, l'élément intermédiaire extérieur (13a) et l'élément intermédiaire intérieur (13b).

10. Liaison mécanique (1) mécaniquement porteuse et électriquement isolante selon la revendication 7, 8 ou 9, **caractérisée en ce que** le tracé de surface de la zone centrale (11c) présente, en coupe longitudinale le long de l'axe, au moins deux tracés radiaux qui créent au moins un gradin.

11. Liaison mécanique (1) mécaniquement porteuse et électriquement isolante selon la revendication 7, 8, 9 ou 10, **caractérisée en ce que** les deux zones extérieures (11a, 11b) sont collées à la zone centrale (11c) au moyen d'une colle sans défauts et sans bulles d'air.

12. Liaison mécanique (1) mécaniquement porteuse et électriquement isolante selon l'une des revendications précédentes, **caractérisée en ce que** le premier filetage (7) est un filetage extérieur ou un filetage intérieur et le deuxième filetage (9), un filetage complémentaire correspondant.

13. Liaison mécanique (1) mécaniquement porteuse et électriquement isolante selon la revendication 12, **caractérisée en ce que** le filetage des éléments intermédiaires extérieur et intérieur (13a ; 13b) sont des filetages complémentaires correspondants par rapport au premier filetage (7) et au deuxième filetage (9).

14. Liaison mécanique (1) mécaniquement porteuse et électriquement isolante selon l'une des revendications précédentes, **caractérisée en ce qu'**au moins l'un des filetages (7, 9, 13a, 13b) et/ou l'extension de matière isolante (11) présentent, pour éviter des inclusions d'air, un revêtement métallique (14) ou une métallisation.

15. Liaison mécanique (1) mécaniquement porteuse et électriquement isolante selon l'une des revendications précédentes, **caractérisée en ce que** l'extension de matière isolante (11) se compose de céramique, de PEEK (polyétheréthercétone), de PFA (perfluoroalkoxy) ou de téflon.

16. Liaison mécanique (1) mécaniquement porteuse et électriquement isolante selon l'une des revendications précédentes, **caractérisée en ce que** le corps creux (3) fait partie d'un inducteur tubulaire, l'élément de liaison (5) étant raccordé électriquement à un groupe de composants (C) capacitif, isolé électriquement par rapport au corps creux (3), et qui, en la deuxième extrémité axiale du corps creux (3), est raccordé électriquement à un autre élément de liaison (6).

17. Liaison mécanique (1) mécaniquement porteuse et électriquement isolante selon l'une des revendications (16) précédentes, **caractérisée en ce que** l'autre élément de liaison (6) du corps creux (3) présente, en termes de construction, la même liaison (1) avec le corps creux (3) que l'élément de liaison (5).

18. Liaison mécanique (1) mécaniquement porteuse et électriquement isolante selon l'une des revendications précédentes 16 ou 17, **caractérisée en ce que** l'élément de liaison (5) et l'autre élément de liaison (6) présentent, en leurs extrémités axiales opposées au corps creux (3), respectivement un filetage intérieur ou extérieur (17) pour vissage à un filetage complémentaire correspondant d'un élément de liaison supplémentaire d'un corps creux supplémentaire.

19. Procédé pour établir une liaison mécanique (1) mécaniquement porteuse et électriquement isolante selon l'une des revendications précédentes, **caractérisé en ce que** la liaison (1) fixe (S1) respectivement un élément de liaison (5, 6) à une extrémité axiale d'un corps creux (3) qui s'étend longitudinalement le long d'un axe (A) de telle manière que la liaison (1) reste mécaniquement stable par rapport aux forces axiales de pression et/ou de traction (F) et le corps creux (3) reste électriquement isolé par rapport aux éléments de liaison (5, 6).

20. Procédé selon la revendication 19, **caractérisé en ce qu'**ont été intégrés (S0) dans le corps creux (3) des groupes de composants (C) capacitifs isolés électriquement par rapport à celui-ci et **en ce que** le corps creux (3) est intercalé (S2) mécaniquement et électriquement dans une série de corps creux supplémentaires raccordés mécaniquement et électriquement entre eux sans groupes de composants capacitifs.

21. Procédé selon la revendication 20, **caractérisée en ce qu'**un corps creux supplémentaire respectif s'étend longitudinalement le long d'un axe (A) respectif et est raccordé (S2) mécaniquement et électriquement, directement ou indirectement, à l'un des deux éléments de liaison (5, 6) du corps creux (3) isolé électriquement au moyen d'un élément de liaison supplémentaire respectif.

22. Procédé selon la revendication 21, **caractérisé en ce que** les éléments de liaison supplémentaires et leurs corps creux supplémentaires se composent d'une matière électriquement conductrice et sont reliés électriquement (S2) entre eux.

23. Procédé selon la revendication 22, **caractérisé en ce que** tous les corps creux sont introduits (S3) dans un réservoir en tant que boîtiers respectifs d'une boucle de chauffage inductive d'un inducteur tubulaire, en particulier pour l'extraction de sable pétrolifère.
